(19) Europäisches Patentamt
European Patent Office
Office européen des brevets

(11) Publication number: **0 413 465 A2**

(12) **EUROPEAN PATENT APPLICATION**

(21) Application number: **90308438.2**

(51) Int. Cl.5: **C08F 4/42**

(22) Date of filing: **31.07.90**

(30) Priority: **18.08.89 GB 8918935**

(43) Date of publication of application: **20.02.91 Bulletin 91/08**

(84) Designated Contracting States: **AT BE CH DE ES FR GB IT LI NL SE**

(71) Applicant: **IMPERIAL CHEMICAL INDUSTRIES PLC**
**Imperial Chemical House, Millbank**
**London SW1P 3JF(GB)**

(72) Inventor: **Ballard, Denis George Harold**
**The Old House, Tarvin Road**
**Chester CH6 7DD(GB)**
Inventor: **Runciman, Peter James Inglis**
**474 Coniscliffe Road**
**Darlington, Co. Durham DL3 8AL(GB)**
Inventor: **Pickering, Anthony**
**76 Beechview Road**
**Kingsley, Cheshire(GB)**
Inventor: **Gardiner, Stuart Price**
**5 Greenacres**
**Frodsham, Cheshire WA6 6BU(GB)**

(74) Representative: **Draggett, Peter Thornton et al**
**Imperial Chemical Industries PLC P.O. Box 6**
**Bessemer Road**
**Welwyn Garden City Herts AL7 1HD(GB)**

(54) **Catalysts.**

(57) A polymerisation process which comprises contacting at least one polar acrylic type or maleimide monomer under polymerisation conditions with a catalyst system comprising a catalyst comprising (i) and (ii):

(i) a tetracoordinate organosilicon, organotin or organogermanium initiator having at least one initiating site in which a silicon, tin or germanium atom is bound by a nitrogen or phosphorus atom to a nitrogen- or phosphorus-containing group which is devoid of any reactive hydrogen atom,

(ii) a co-catalyst which is a source of fluoride, bifluoride, cyanide, cyanate, aliphatic and aromatic mono-sulphonate, or azide ions or a Lewis acid, and which ions or Lewis acid are/is rendered available in the polymerisation medium,

and

(iii) an interactive agent capable of interacting with the anion of the co-catalyst, a catalyst system consisting of the componemts (i) to (iii) and the combination of components (ii) and (iii), both as used in the process.

EP 0 413 465 A2

## CATALYSTS

This invention relates to a polymerisation process and more particularly to a process for polymerising polar olefinic monomers.

The group transfer polymerisation of acrylic type and maleimide monomers using certain organosilicon, organotin or organogermanium initiators and co-catalysts which are Lewis acids or sources of fluoride, bifluoride, cyanide or azide ions has been described in United States Patents No 4414372 and 4417034. The products are said to be "living" polymers by which is meant polymers which contain at least one active terminal group and are capable of polymerising further in the presence of monomer(s) and co-catalyst.

Whilst solvents are said to be not essential, it is acknowledged in the above mentioned patents that they are beneficial in controlling temperature during the exothermic polymerisations. In fact, in the absence of solvents the rate of polymerisation is extremely high and hitherto this polymerisation technique has been of no practical value in bulk polymerisation processes.

It has now been found that the onset of polymerisation in polymerisation processes can be delayed by the presence of agents capable of interacting with the co-catalyst. By contrast, the rate of polymerisation cannot be satisfactorily controlled by merely reducing the concentration of the initiator or the co-catalyst.

It is also desirable to be able to produce high molecular weight polymers in catalysed addition polymerisation, in particular of polar olefinic (including acrylic type) monomers, with a narrow molecular weight distribution, in particular in the bulk polymerisation of such monomers.

However, hitherto this has been difficult to achieve.

We have now found that a certain type of catalyst system may be used advantageously to produce high molecular weight polymers with a narrow molecular weight distribution, and especially in some cases in the controlled bulk polymerisation of polar olefinics, in particular of acrylics.

Accordingly, in a first aspect the invention provides a polymerisation process which comprises contacting at least one polar acrylic type or maleimide monomer under polymerisation conditions with a catalyst system comprising a catalyst comprising (i) and (ii):

(i) a tetracoordinate organosilicon, organotin or organogermanium initiator having at least one initiating site in which a silicon, tin or germanium atom is bound by a nitrogen or phosphorus atom to a nitrogen- or phosphorus-containing group which is devoid of any reactive hydrogen atom,

(ii) a co-catalyst which is a source of fluoride, bifluoride, cyanide, cyanate, aliphatic and aromatic monosulphonate, or azide ions or a Lewis acid, and which ions or Lewis acid are/is rendered available in the polymerisation medium,

and

(iii) an agent capable of interacting with the anion of the co-catalyst.

Monomers which may be polymerised by the process of the invention include monomers of the formula:

$CH_2=C(Y)X$ or 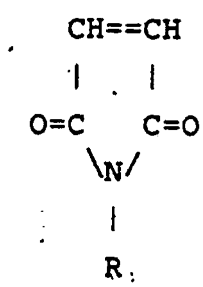

wherein:

X is CN, -CH=CHC(O)X′ or -C(O)X′;

Y is -H, $-CH_3$,-CN or $-CO_2R$, provided, however, when

X′ is -CH=CHC(O)X′, Y is -H or $-CH_3$;

X′ is $-OSi(R^1)_3$, -R, -OR or -NR′R″; each $R^1$ independently is H or a hydrocarbyl radical which is an aliphatic, alicyclic, aromatic or mixed aliphatic-aromatic radical containing up to 20 carbon atoms, provided that at least one $R^2$ group is not H;

R is

a hydrocarbyl radical which is an aliphatic, alicyclic, aromatic or mixed aliphatic aromatic radical containing up to 20 carbon atoms, or a polymeric radical containing at least 20 carbon atoms,
any of said radicals optionally containing one or more ether oxygen atoms within aliphatic segments thereof and optionally containing one or more functional substituents that are unreactive under polymerizing conditions, and optionally containing one or more reactive substituents of the formula:
$-Z'(O)C-C(Y^1)=CH_2$ wherein
$Y'$ is H or $CH_3$ and $Z'$ is O or $NR'$;
and
each of $R'$ and $R''$ is independently selected from $C_{1-4}$ alkyl.

As indicated above in the definition of R in the formulas for the monomer, substituents having oxygen-nitrogen- or silicon-containing groups which are devoid of reactive hydrogen atoms under polymerizing conditions may be used. Groups such as $OSi(R^1)_3$ and $CONH_2$ are nonreactive under such conditions and therefore can be tolerated. On the other hand, groups such as $CO_2H$ and OH are reactive under polymerizing conditions. Such groups must be chemically protected, i.e. deactivated.

Monomers containing such deactivated groups are useful in the preparation of polymers which upon treatment to remove the protective group, have functional sites along the polymer chain. Monomers which contain sufficiently sterically hindered amine and alcohol groups that remain inert under reactive conditions may be used directly without deactivation.

Typical examples of vinylic monomers with such functional groups, which may be polymerised in the process of the present invention include:
methacrylic acid esters such as methyl methacrylate, ethyl methacrylate, propyl methacrylate, butyl methacrylate, 2-ethylhexyl methacrylate, lauryl methacrylate, tricyclo[5,2,1,$0^{2',6}$]dec-3-en-8-yl methacrylate and p-tolyl methacrylate.
substituted methacrylic acid esters such as 2-(dimethylamino)ethyl methacrylate, 2-acetoxyethyl methacrylate; 3-methoxypropyl methacrylate and 2-(trimethylsiloxy)ethyl methacrylate,
polyfunctional methacrylic acid esters such as sorbyl methacrylate, glycidyl methacrylate,
2-[(1-propenyl)oxy]ethyl methacrylate, allyl acrylate, methacryloxyethyl acrylate and linoleate and triethyleneglycol dimethacrylate.
acrylic acid esters such as methyl acrylate, ethyl acrylate, isopropyl acrylate, n-butyl acrylate, sec-butyl acrylate, tert-butyl acrylate, phenyl acrylate and cyclohexyl acrylate;
substituted acrylic acid esters such as 2-(dimethylamino)ethyl acrylate, 2,2,3,3,4,4,4-heptafluorobutyl acrylate, ethyl 2-cyanoacrylate, 4-fluorophenyl acrylate, and ethyl 2-chloroacrylate;
polyfunctional acrylic acid esters such as sorbyl acrylate, 3-methacryloxypropyl acrylate, 2-[(1 propenyl)-oxy]ethyl acrylate and allyl acrylate;
unsaturated nitriles such as methacrylonitrile, methylene malononitrile and acrylonitrile;
N,N-dialkyl unsaturated amides such as N,N-dimethylacrylamide; and
vinyl compounds, in particular aromatic vinyl compounds, such as propyl vinyl ketone, styrene, o-, m-or p-methylstyrene, o-, m- or p-methoxystyrene o-methylstyrene, o-, m- or p-dimethylaminostyrene or m-or p-chlorostyrene.

Preferred amongst these monomers are:
methyl methacrylate, lauryl methacrylate, butyl methacrylate, 2-ethylhexyl methacrylate and tricyclo-[5,2,1,$0^{2',6}$]dec-3-en-8-yl methacrylate;
2-(trimethylsiloxy)ethyl methacrylate, 2-methacryloxyethyl acrylate, 2-acetoxyethyl methacrylate and 2-(dimethylamino)ethyl methacrylate;
glycidyl methacrylate and sorbyl methacrylate;
butyl acrylate, methyl acrylate and butyl acrylate;
sorbyl acrylate;
acrylonitrile and methacrylonitrile;
styrene, α-methylstyrene and p-chlorostyrene;

Methyl methacrylate is especially preferred.

Mixtures of two or more monomers may be used if desired.

The catalyst system consisting of the componemts (i) to (iii) and the combination of components (ii) and (iii) used in the process of the first aspect of present invention form respectively a second and third aspect of the invention.

Tetracoordinate organosilicon, organotin or organogermanium initiators which may be used in the process of the invention include any having at least one initiating site in which

a) a silicon, tin or germanium atom is bound to a nitrogen- or phosphorus-containing group and

b) the group is devoid of any reactive hydrogen atom by the nitrogen or phosphorus atom, including any of those disclosed in European Patent publication the disclosure of which is incorporated herein by reference.

Examples of specific initiators which are useful in the process and catalyst system of the invention include an (initiator) first component of formula (I):

$M(X_m)(Y_n)Z_p$ (I)

wherein

M is Si, Ge or Sn

m and p are each an integer and n is 0 or an integer such that (m + n + p) = 4;

X is $QR^1R^2$

where Q is N, P, As or P(=T)G.D where T is O or S and G and D are each independently a bond, O or S and

$R^1$ and $R^2$ are each independently optionally substituted hydrocarbyl or together are optionally substituted hydrocarbadiyl which are inert in the process conditions of the present invention, or, when Q is P(=T)G.D as hereinbefore defined, $R^1$ and $R^2$ are each independently $M(Y_n)Z_p$ as hereinbefore defined.

Y is independently any group as defined for X, or any group selected from a group OA where A is optionally substituted hydrocarbyl inert in the process conditions of the present invention, or trialkylsilylalkyl;

Z is independently any group as defined for Y, or an organic polymer radical comprising further $M(Y_n)Z_p$ moieties; or

p is 2 and

$Z_2$ is a group $Z^1{}_2$: of the formula $OSiR^5R^6OSiR^7R^8O$-where $R^5$, $R^6$, $R^7$ and $R^8$ are each independently selected from any of the values defined for $R^1$ or $R^2$, or

$Z^1{}_2$ is a moiety -EBE- where E is a bond or O and B is a polymer diradical, or E is O and B is an inorganic solid on whose surface the two -O- groups are located, which comprises further $-OMX_mY_nO$-moieties.

In the (initiator) first component (i) of the catalyst system of formula (I):

Favoured M is Si.

The term 'optionally substituted' herein in relation to X, Y and Z groups includes substitution by pendent mono-or di-valent groups, and, in relation to X only, substitution by hetero-atoms.

It will be appreciated that, although bonds between M and at least one of X, Y or Z break in the catalytic process of the present invention, the groups themselves should be inert in the process conditions.

For this reason such groups, even when described as optionally substituted, are often unsubstituted by pendent monovalent substituents.

Within X (ie $QR^1R^2$ as hereinbefore defined), Q is often N, P, P=O or O-P(=O)-O, in particular N and P.

Suitable $R^1$ and $R^2$ optionally substituted hydrocarbyl include optionally substituted alkyl, cycloalkyl (including polycycloalkyl), alkenyl, cycloalkenyl, aryl aralkyl and aralkenyl.

Suitable $R^1$ and $R^2$ optionally substituted alkyl and such alkyl as a component within $R^1$ or $R^2$ include optionally substituted $C_{1-4}$ alkyl, in particular methyl. Such alkyl groups are often unsubstituted.

When X is N or P, such $R^1$ and $R^2$ groups include optionally substituted oxo-substituted alkyl, i.e. such $C_{1-4}$ alkanoyl, in particular acetyl.

Suitable $R^1$ and $R^2$ optionally substituted cycloalkyl include such $C_{5-8}$, cycloalkyl, for example cyclohexyl, and polycycloalkyl. Such cycloalkyl groups are often unsubstituted.

Suitable optionally subsituted alkenyl as or within $R^1$ and $R^2$ include optionally substituted $C_{2-4}$alkenyl, in particular methylprop-1-enyl.

Suitable $R^1$ and $R^2$ optionally substituted cycloalkenyl include such $C_{5-8}$ cycloakenyl, for example cyclohex-1-enyl, especially when Q is N. Such cycloalkenyl groups are often unsubstituted.

Suitable $R^1$ and $R^2$ optionally substituted aryl include phenyl optionally substituted by substituents inert in the desired polymerisation conditions, which include alkyl and aryl. Such aryl groups are however often unsubstituted.

Suitable $R^1$ and $R^2$ optionally substituted aralkyl groups include the above suitable alkyl groups substituted by the above suitable aryl groups, and thus include benzyl optionally substituted in the phenyl ring, but more often unsubstituted benzyl.

Suitable $R^1$ and $R^2$ optionally subsituted aralkenyl include the above suitable alkenyl groups substituted by the above suitable aryl groups, and thus include 2-methyl-1-phenylprop-1-enyl (phenylmethallyl) optionally substituted in the phenyl ring, but more often unsubstitued 2-methyl-1-phenylprop-1-enyl.

When Q is N, $R^1$ and $R^2$ are favourably together optionally substituted hydrocarbadiyl.

In one preferred group, such ($R^1$ + $R^2$) are unsubstituted by hetero-atoms.

In a second preferred group, such ($R^1$ + $R^2$) are substituted by hetero-atoms other than nitrogen.

In a third preferred group, such ($R^1$ + $R^2$) are unsubstituted by pendent monovalent substituents.

In a fourth preferred group, such ($R^1$ + $R^1$) have $\alpha$ and/or $\omega$ saturated carbon atoms substituted by oxo groups.

For all values of Q :

Suitable ($R^1$ + $R^2$) optionally substituted hydrocarbadiyl exclude 1,2-diyl, but include optionally substituted alkadiyl, (poly)cycloalkadiyl, alkenediyl, alkapolyenediyl, cycloalkenediyl and arylene, and diradical combinations of such diradicals such as arylenealkyl, arylenealkenyl and arylenecycloalkyl.

Suitable ($R^1$ + $R^2$) optionally substituted alkadiyl include $\alpha,\omega$-$C_{3-6}$ alkadiyl optionally substituted by at least one hetero-atom or -group such as O, S or $NR^3$ where $R^3$ is independently any of the values of $R^1$, or independently another group $M(Y_n)Z_p$ as hereinbefore defined.

Corresponding $QR^1R^2$ groups thus include 4 to 7-member heterocyclyl groups, such as pyrrolidino, piperidino and morpholino, and $N'$-$C_{1-4}$ alkylpiperazino, and phospha-analogues thereof, in particular morpholino.

Such groups are often not further substituted.

When X is N, such ($R^1$ + $R^2$) groups include similarly optionally substituted, $\alpha$-oxo- or $\alpha,\omega$-dioxo-substituted alkadiyl.

Corresponding $QR^1R^2$ may be a 4 to 7-member lactamido or cycloimido group such as N-piperidonyl or succinimido. Such groups are often not further substituted.

Suitable ($R^1$+$R^2$) optionally substituted alkenediyl and alkapolyenediyl include $\alpha,\omega$- $C_{4-6}$ alkenediyl, $\alpha,\omega$-$C_{4-6}$ alkadienediyl and $\alpha,\omega$- hexatrienediyl optionally substituted by at least one hetero-atom or group, such as O or S, or $NR^3$ where $R^3$ is independently any of the values of $R^1$.

Corresponding $QR^1R^2$ groups thus include 5- to 7-member unsaturated heterocyclyl groups such as 1-pyrryl, pyrrolinyl, imidazolyl and imidazolinyl, in particular imidazolyl, which are are often not further substituted.

When X is N, such ($R^1$ + $R^2$) groups include similarly optionally subsititued $\alpha$-oxo- or $\alpha,\omega$-dioxo-disubstituted alkenediyl, ie $QR^1R^2$ may be a heterocyclyl group such as oxazolid-2-on-3-yl.

$R^1$ and $R^2$ may each be alkylene - or arylenecarbonyl in a polyamide chain bearing other $M(Y_n)Z_p$ groups.

Suitable ($R^1$ + $R^2$) optionally substituted arylene groups include biphenyl-2,2'-diyl optionally substituted as for $R^1$ and $R^2$ aryl.

Corresponding $QR^1R^2$ groups thus include optionally substituted 9-carbazolyl and its phospha analogue. Such groups may be substituted in the aryl moiety by alkyl but are often unsubstituted.

Suitable ($R^1$ + $R^2$) optionally substituted aryleneakyl groups include groups composed of a 1,2-arylene moiety and an $\alpha,\omega$-$C_{2-4}$ alkadiyl, which latter may be $\alpha$-oxo-substituted.

Corresponding $QR^1R^2$ groups thus include benzo- fused 5- to 7-member saturated heterocyclyl groups such as N-indanyl and N-indan-2-onyl and their phospha analogues. Such groups may be substitued in the aryl moiety by alkyl but are often unsubstituted.

Suitable ($R^1$ + $R^2$) optionally substituted arylenealkenyl groups include groups composed of a 1,2-arylene moiety and an $\alpha,\omega$ $C_{2-4}$ alkenediyl.

Corresponding $QR_1R\{2$ groups thus include benzo-fused 5- to 7-member unsaturated heterocyclyl groups such as N-indolyl and its phospha analogue. Such groups may be substituted in the aryl moiety by alkyl but are often unsubstituted.

Suitable ($R^1$ + $R^2$) optionally substituted arylenecycloalkyl groups include groups composed of a 1,2-arylene moiety and 1',2'-$C_{5-7}$ cycloalkadiyl moiety.

Corresponding $QR^1R^2$ groups thus include 1,2,3,4-tetrahydro-9-carbazolyl and its phospha analogue. Such groups may be substituted in the aryl moiety by alkyl but are often unsubstituted.

Suitable A groups within Y and Z include optionally substituted alkyl, cycloalkyl (including polycycloalkyl), alkenyl, cycloalkenyl, aryl, aralkyl, alkyl disubstituted by arylene and alkenyl disubstituted by arylene.

Suitable Y, Z and A alkyl groups include $C_{1-20}$ alkyl groups, such as $C_{1-8}$ alkyl groups. Suitable $C_{1-8}$ alkyl groups include favoured straight-chain $C_{1-4}$ alkyl groups, eg methyl and ethyl, and also include branched $C_{4-8}$ alkyl groups, in particular those with a high degree of branching, eg optionally substituted (but often unsubstituted) neopentyl.

Within Y, Z and A groups comprising component alkyl groups, favoured alkyl groups include $C_{1-4}$ alkyl, in particular methyl.

Suitable Y and Z alkoxy groups include $C_{1-4}$ alkoxy, in particular methoxy and ethoxy.

Suitable Y, Z and A cycloalkyl groups include polycycloalkyl, in particular adamantyl.

Suitable Y and Z optionally substituted cycloalkoxy groups include $C_{4-7}$ cycloalkoxy, thus including cyclohexyloxy, any of which may be $\alpha$-oxo or $\alpha,\omega$-dioxo substituted.

Within Y, Z and A aralkyl groups, favoured optionally substituted aryl groups include optionally substituted phenyl and 1-naphthyl. Suitable substituents for such aryl groups include substituents inert in the desired polymerisation conditions.

Preferably, the conjugate protic acid of such aryl groups has a $pK_a$ in DMSO<18. Such groups will be readily apparent, but include alkyl and aryl groups.

Such aryl groups are often unsubstituted.

Suitable Y and Z optionally substituted aryloxy groups include optionally substituted phenoxy, such as phenoxy. Other suitable substituents include those listed above for Y and Z aryl groups.

Favoured Y and Z aralkoxy groups include phenyl $C_{1-4}$ alkoxy, in particular benzyloxy, optionally substituted in the phenyl ring. Suitable substituents include those listed above for Y and Z aryl groups.

When A in Y or Z is optionally substituted alkyl disubstituted by arylene, the latter may be optionally substituted biphenyl-2,2′-diyl or 1,2-phenylene, so that corresponding suitable Y and Z optionally substituted alkoxy disubstituted by arylene include methoxy disubstituted by optionally substituted biphenyl-2,2′-diyl, ie fluorenyl-9-oxy, and propoxy 1,3-disubstituted by 1,2-phenylene, ie indanyloxy.

Such groups are often unsubstituted. However if any arylene moiety in A is substituted, suitable substituents include those listed above for substituents of aryl groups within Y, Z and A.

When A in Y or Z is optionally substituted alkenyl disubstituted by arylene the latter may be 1,2 phenylene so that corresponding suitable Y and Z optionally substituted alkenyloxy disubstituted by arylene include allyloxy 1,3-disubstituted by optionally substituted 1′,2′-phenylene, ie optionally substituted 1-indenyloxy. Such groups are often unsubstituted.

Catalysts of the present invention in which the initiator component (i) has at least one group Y, Z or A which is

a) optionally substituted aralkyl

b) optionally substituted cycloalkyl (especially polycycloalkyl) or

c) optionally substituted branched alkyl may be used advantageously in vinylic bulk polymerisation systems. This is specially so where any such group is bulkily substituted aralkyl, or adamantyl or neopentyl, and other such suitable Y and Z groups also include fluorenyl-9-oxy and indenyl-1-oxy.

The same advantages attach to initiator components where X is a suitable 1-aza analogue of the foregoing Y, Z or A groups.

When p is 2, favoured $Z_2$ groups include $-0SiR^2R^6OSiR^7R^80-$ where $R^5$ to $R^8$ are the same and are optionally substituted benzyl (in particular benzyl), $C_{1-6}$ alkyl or optionally substituted phenyl. $R^2$ to $R^5$ are often unsubstituted.

Where Z is an organic polymer radical, or $Z_2$ is or comprises a polymer diradical, the polymer is preferably a particulate one insoluble in any desired polymerisation system (for example a highly-cross-linked polymer with the $MX_mY_n$ moieties on its surface). Preferably the polymer is a solid granulate of relatively high surface area, for example in the range 200 to 600 $m^2$/gm, favourably with a concentration of $MX_mY_nZ$ moieties of 1 per 3 to 30 square Angstrom.

M in each $MX_mY_nZ$ moiety may be linked to the polymer via a carbon atom on e.g. a pendent alkyl containing chain of the type described for Y and Z straight chain alkyl above.

Depending on the polymerisation medium, highly cross-linked alkylene, arylene, acrylic or styrene homo-or co-polymers may be appropriate for B polymer diradicals.

Favoured $Z_2$ groups also include -OBO- where B is an inorganic solid with a plurality of surface hydroxyl functions, such as silica or a metal hydroxide or hydrated oxide, e.g. alumina. B may be inter alia a flat body of low specific surface area or (preferably) particulate with a relatively high specific surface area, for example in the range 200 to 600 $m^2$/gm.

Favourably, the $-OMX_mY_nO-$moieties are present on the surface at a concentration of 1 per 3 to 30 square Angstrom.

This may be achieved by involving at least 20%, preferably at least 60%, of the available surface hydroxyl functions in -OBO-bonding to $M_mY_n$ moieties.

Further examples of specific initiators which are useful in the process and catalyst system of the invention include an (initiator) first component of formula (II):

$MX^1(Y_n)Z_p$ (II)

wherein

M is Si, Ge or Sn;

n is 0 or an integer, and p is an integer such that $(n + p) = 3$;

$X^1$ is a radical

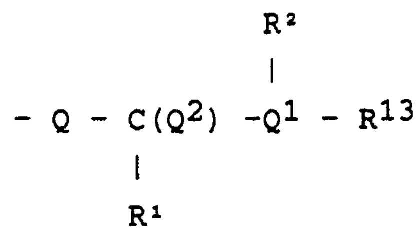

where
Q and $Q^1$ are each independently N, P or As;
$Q^2$ is O, S, NR or PR where R is $C_{1-4}$ alkyl;
$R^1$, $R^2$ and $R^{13}$ are each independently optionally substituted hydrocarbyl; or $R^2$ and $R^{13}$ together are optionally substituted aliphatic hydrocarbadiyl and $R^1$ is optionally substituted hydrocarbyl;
all such $R^1$, $R^2$ and $R^{13}$ being inert in the conditions of the process of the present invention;
Y and Z are as defined in formula (I).

In the (initiator) first component (i) of formula (II):

Favoured M is Si.

The term 'optionally substituted' is as defined in formula (I).

Within $X^1$ as hereinbefore defined each of Q and $Q'$ independently is often N or P; preferably both are N or P, and in particular both are N.

$Q^2$ is often O.

Suitable, favoured and preferred $R^1$, $R^2$ and $R^3$ optionally substituted hydrocarbyl are as so described in formula (I) with respect to $R^1$ and $R^2$.

Suitable $R^1$, $R^2$ and $R^3$ optionally substituted alkyl and such alkyl as a component within the same include optionally substituted $C_{1-4}$ alkyl, optionally substituted by hetero-atoms.

A group of preferred $R^1$, $R^2$ and $R^{13}$ includes methyl, ethyl and methoxy, especially methyl and methoxy.

In a second preferred group, when Q and/or $Q'$ is N or P, in particular when both are N, such $R^1$ include sila-substituted alkyl, eg trialkylsilyl, especially trimethylsilyl.

When $Q^1$ is N, $R^2$ and $R^{13}$ may together be optionally substituted hydrocarbadiyl.

In one group, such ($R^2$ + $R^{13}$) are unsubstituted by hetero-atoms.

In a second group, such ($R^2$ + $R^{13}$) are substituted by hetero-atoms other than nitrogen.

In a third group, such ($R^2$ + $R^{13}$) are unsubstituted by pendent monovalent substituents.

For all values of $Q^1$:

Suitable, favoured and preferred ($R^2$ + $R^{13}$) are as so described in formula (I) with respect to ($R^1$ + $R^2$).

Additionally, $R^1$ may be alkylene or arylene and either $R^2$ or $R^{13}$ may be alkylene or arylene in a polyurea chain bearing other $M(Y_n)_pZ$ groups.

Suitable corresponding X will consist of a repeat moiety of formula:

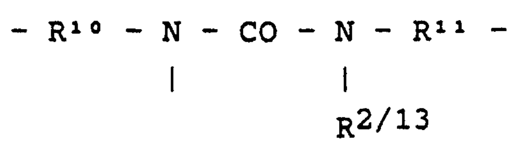

where $R^{10}$ and $R^{11}$ are each independently alkylene or arylene.

Suitable, favoured and preferred Y, Z and A groups are as so described in formula (I).

Particular components within a preferred sub-group within formula (II) are those in which q = 0 and r = 3.

Yet further examples of specific initiators which are useful in the process and catalyst system of the invention include an (initiator) first component comprising a plurality of atoms M as hereinbefore defined each independently in a moiety of formula (III):

$MX^2(Yn)Zp$ (III)
wherein
M is Si, Ge or Sn
n is O or an integer, and p is an integer such that (n + p) = 3;

$X^2$ is a diradical

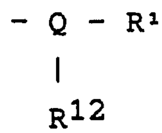

bound via Q to M
where

Q is N, P, As or P(=T)G.D where T is O or S and G and D are each independently a bond, O or S,

$R^1$ is optionally substituted hydrocarbyl, or, when Q is P, M(Yn)Zp as herein defined,

$R^{12}$ is optionally substituted hydrocarbadiyl, or $R^1$ and $R^{12}$ together are optionally substituted hydrocarbatriyl,
all such $R^1$ and $R^{12}$ being inert in the conditions of the process of the present invention;
Y and Z are as defined in formula (I).

In the (initiator) first component (i) of formula (III):

$R^{12}$ may be linked directly or indirectly to any group as defined for $X^2$, or an organic radical comprising further moieties of formula (I) (which may be a polymer as hereinafter defined in relation to formula (III) only, or one or more M(Yn)Zp moieties as herein defined.

The term "polymer" herein in relation to the initiator components of formula (III) includes a reference to oligomers. The term in particular includes polymers of vinylic monomers.

Favoured M is Si.

The term 'optionally substituted' is as defined in formula (I).

Suitable, favoured and preferred $R^1$ optionally substituted hydrocarbyl are as so described in formula (I) with respect to $R^1$ and $R^2$.

In a further preferred group within suitable $R^1$ optionally substituted alkyl when Q is N or P, such $R^1$ include optionally further substituted $\alpha$-oxo-substituted alkyl, i.e. optionally substituted $C_{1-4}$ alkanoyl, in particular substituted 2-methylpropionyl, acetyl and formyl.

Formyl may be substituted by alkoxy, such as iso-propoxy and ter.-butoxy. The corresponding groups $R^1$ will be isopropoxycarbonyl and tert.-butoxycarbonyl.

Such $R^1$ groups may also favourably be aza-substituted $\beta$ to the Q nitrogen atom, so that X comprises a ureido group. For example 2-methylpropionyl may be substituted by N. Such $R^1$ groups may also favourably be substituted by substituted amino such as amino substituted by aliphatic substituents, such as alkyl or cycloalkyl, again so that X comprises a ureido group. For example formyl may be substituted by substituted amino such as amino substituted as above.

In both cases the corresponding group $R^1$ will comprise a carbamoyl moiety, eg dimethylcarbamoyl.

Suitable $R^{12}$ optionally substituted hydrocarbadiyl include optionally substituted alkanediyl and cycloalkanediyl (including polycycloalkanediyl).

Suitable $R^{12}$ optionally substituted hydrocarbadiyl also include alkenediyl and cycloalkenediyl.

Suitable $R^{12}$ optionally substituted hydrocarbadiyl further include arylene.

Suitable $R^{12}$ optionally substituted hydrocarbadiyl also include diradical combinations of the foregoing diradicals, such as arylenealkyl, aralkanediyl, arylenealkenyl and aralkenediyl.

Suitable $R^{12}$ optionally substituted alkanediyl include optionally substituted $C_{1-4}$ alkanediyl, in particular methylene, ethylene and propylene. Two corresponding $MX(Y_n)Z_p$ moieties may be joined by their $R^2$ (eg propylene) groups to give a present catalyst system component (i) in which the two M atoms are bridged by an alkylene (eg 1,6-hexylene) moiety.

When Q is N or P, such $R^2$ groups include alkanediyl which is oxo-substituted $\alpha$ to Q and $\alpha,\omega$-dioxo-substituted alkanediyl, all optionally inertly substituted.

Such $R^2$ groups may also favourably be aza-substituted $\beta$ to the Q nitrogen atom, so that X comprises a ureido group. For example, $R^2$ propane- 1,2-diyl may be so substituted to comprise an N-methylcarbamoyl group, with a free valency to the N atom.

Two corresponding $MX(Y_n)Z_p$ moieties may be joined by their $R^2$ groups by $C_{2-8}$ straight chain alkylene, in particular 1,6-hexylene, to give a present catalyst system component (i) in which the two M

atoms are bridged by a hexylene-1,6-bis(N-methylcarbamoyl) moiety.

Suitable $R^{12}$ optionally substituted cycloalkanediyl include such $C_{5-8}$ cycloalkanediyl, eg cyclohexane-1,4-diyl, and polycycloalkanediyl.

Such cycloalkanediyl groups are often unsubstituted.

Optionally substituted alkenediyl as $R^{12}$ and as a component within $R^{12}$ includes optionally substituted $C_2$-alkenediyl, in particular 2-methylprop-1-ene-1,3-diyl.

Suitable $R^{12}$ optionally substituted cycloalkenediyl include such $C_{5-8}$ cycloalkenediyl, eg cyclohex-1-ene-1-4-diyl, especially when Q is N.

Suitable $R^{12}$ optionally substituted cycloalkenediyl also include polycycloalkenediyl.

Such cycloalkenediyl groups are often unsubstituted.

Suitable $R^{12}$ optionally substituted arylene include phenylene optionally substituted by substituents inert in the conditions of the process of the present invention.

Suitable $R^{12}$ optionally substituted arylenealkyl and such arylenealkyl as a component within $R^{12}$ include optionally phenylene-$C_{1-4}$ alkyl.

Suitable $R^{12}$ optionally substituted aralkenediyl include the above suitable alkenediyl groups substituted by aryl groups corresponding to the above suitable arylene groups. They are more often unsubstituted.

When Q is N, $R^1$ and $R^{12}$ may be together optionally substituted hydrocarbatriyl.

In one group, such ($R^1$ + $R^{12}$) are unsubstituted by hetero-atoms.

In a second group, such ($R^1$ + $R^{12}$) are substituted by hetero-atoms other than nitrogen.

In a third group, such ($R^1$ + $R^{12}$) are unsubstituted by pendent monovalent substituents.

In a fourth group, such ($R^1$ + $R^{12}$) have one or two saturated carbon atoms $\alpha$ to Q, and in particular also $\alpha$ to vinylic unsaturation, substituted by oxo groups.

For all values of Q:

Suitable, favoured and preferred ($R^1$ + $R^{12}$) are generally as so described for corresponding $R^{12}$ hereinbefore.

Suitable ($R^1$ + $R^{12}$) include optionally substituted alkanetriyl and cycloalkanetriyl (including polycycloalkenetriyl).

Suitable ($R^1$ + $R^{12}$) also include optionally substituted alkenetriyl, alkapolyenetriyl and cycloalkenetriyl,

Suitable ($R^1$ + $R^{12}$) further include optionally substituted arenetriyl, arenetriylalkyl, arylenealkanediyl, arenetriylalkenyl, arylenealkenediyl, arenetriylcycloalkyl, and arylenecycloalkanediyl.

Suitable ($R^1$ + $R^{12}$) optionally substituted alkanetriyl include alkanetriyl optionally substituted by at least one hetero-atom or -group such as O, S or $NR^{23}$ where $R^{23}$ is independently a bond, any of the values of $R^1$, or independently another group $M(Y_n)Z_p$ as hereinbefore defined.

Corresponding $QR^1R^{12}$ groups thus include 4 to 7-member heterocyclic groups, such as pyrrolidine-1,3-diyl, piperidine-1,4-diyl and piperazine-1,4-diyl, and phospha-analogues thereof. Such groups are often not further substituted.

When Q is N, such ($R^1$ + $R^{12}$) groups include similarly optionally substituted, $\alpha$-oxo- or $\alpha$-$\omega$-dioxo-substituted alkanetriyl, i.e. $QR^1R^2$ may comprise a 4 to 7-member lactamido or cycloimido group, and include imidazolidine-2,4-dione-1,3-diyl, pyrrolid-2-one-1,4-diyl, piperazine-2,5-dione-1,4-diyl and piperid-2-one-1,4-diyl. Such groups are often not further substituted.

Suitable ($R^1$ + $R^{12}$) optionally substituted alkenetriyl and alkapolyenetriyl include $C_{4-6}$ alkenetriyl, $\alpha,\omega$-$C_{4-6}$ alkadienetriyl and hexatrienetriyl optionally substituted by at least one hetero-atom or group, such as O or S, or $NR^3$ where $R^3$ is independently a bond, any of the values of $R^1$.

Corresponding $QR^1R^{12}$ groups thus include 5- to 7- member unsaturated heterocyclodiyl groups such as pyrrole-1,3-diyl and pyrroline-1,3-diyl.

Such $QR^1R^{12}$ groups thus also include imidazole-1,3-diyl and imidazoline-1,3-diyl, in particular imidazole-1,3-diyl.

Such groups are often not further substituted.

Optionally substituted $\alpha$-oxo- or $\alpha$-$\omega$-dioxo-substituted alkenetriyl, i.e. $QR^1R^{12}$ may be a heterocyclodiyl group, which is eg 0-substituted, such as oxazolid-2-one-3,5-diyl.

Suitable ($R^1$ + $R^{12}$) optionally substituted arenetriyl groups include biphenyl-2,k,2′-triyl, where k is an integer between 3 and 6, optionally substituted as for $R^1$ aryl.

Corresponding $QR^1R^{12}$ groups thus include optionally substituted, u-9-carbazolediyl, where u is 1 or 2, and its phospha analogue. If any arene moiety therein is substituted, suitable substituents include alkyl, and such alkyl as a substituent within ($R^1$ + $R^{12}$) include optionally substituted $C_{1-4}$ alkyl, in particular methyl. Such groups are often unsubstituted.

Suitable ($R^1$ + $R^{12}$) optionally substituted arenetriylakyl and arylenealkanediyl groups include groups composed of a 1,2,k-arenetriyl moiety, where k is integer between 3 and 6, and an $\alpha,\omega$-$C_{2-4}$ alkanediyl, or

of a 1,2-arylene moiety and a $C_{2-4}$ alkanetriyl moiety, where the aliphatic moieties may be $\alpha$-oxo-substituted.

Corresponding $QR^1R^{12}$ groups thus include benzo-fused 5 to 7-member saturated heterocyclic groups, such as N-indanyl and N-indan-2-onyl with a second bond to either ring, and their phospha analogues. Such ($R^1$ + $R^{12}$) groups may be substituted in the arene moiety by alkyl, but are often unsubstituted.

Suitable ($R^1$ + $R^{12}$) optionally substituted arenetriylalkenyl and arylenealkenediyl groups include groups composed of

a) a 1,2,k-arenetriyl moiety, where k is an integer between 3 and 6, and an $\alpha,\omega$-$C_{2-4}$ alkenediyl, or

b) a 1,2-arylene moiety and a $C_{2-4}$ alkenetriyl moiety, where the aliphatic moieties may be $\alpha$-oxo-substituted.

Corresponding $QR^1R^2$ groups thus include benzo-fused 5 to 7-member unsaturated heterocyclic groups, such as N-indolyl with a second bond to either ring, and its phospha analogue. Such of the ($R^1$ + $R^{12}$) groups may be substituted in the arene moiety by alkyl, but are often unsubstituted.

Suitable ($R^1$ + $R^{12}$) optionally substituted arenetriylcycloalkyl and arylenecycloalkanediyl groups include groups composed of a 1,2-k-arenetriyl moiety, where k is an integer between 3 and 6, and an 1,2 $C_{2-4}$ cycloalkanediyl, or of a 1,2-arylene moiety and a $C_{2-4}$ cycloalkanetriyl moiety, where the aliphatic moieties may be $\alpha$-oxo-substituted.

Corresponding $QR^1R^{12}$ groups thus include benzo-fused heteropolycyclics, such as 1,2,3,4 tetrahydro-u,9-carbazolediyl, where u is 1 or 2, and its phospha analogue. Such groups may be substituted in the arene moiety by alkyl but are often unsubstituted.

Suitable, favoured and preferred Y, Z and A groups are as so described in formula (I).

Favourably $R^{12}$ in each moiety of the formula (I) may be linked to the rest of the initiator (whether another moiety of the formula (I) or a polymer -including oligomer - backbone) via an alkylene-containing chain, or via an O or C atom of an alkyleneoxy-containing group. Suitable groups therefor comprise alkylene of the type described above for $R^2$, including $C_{1-4}$ straight chain alkylene, in particular methylene and ethylene.

Where the moiety of formula (III) is bonded to a polymer (as hereinbefore defined), the polymer may be a particulate one insoluble in any desired polymerisation system) for example a highly-cross-linked polymer as defined for Y and/or Z in formula (I) or a corresponding oligomer soluble in the the same system.

Favoured ($R^1$ + $R^{12}$) groups in the initiators of formula (III) include

a) acyclic $QR^1R^{12}$ as hereinbefore defined and

b) cyclic $QR^1R^{12}$ as hereinbefore defined such as u,9-carbazolediyl, where u is 1 or 2, imidazolidine-1,4-dione-1,3-diyl, imidazole-1,3-diyl, and oxazolid-2-one-3,5-diyl.

In one preferred group such ($R^1$ + $R^{12}$) are unsubstituted by hetero-atoms, and preferred X include u,9-carbazolediyl as hereinbefore defined.

In a second preferred group, such ($R^1$ + $R^{12}$) are substituted by hetero-atoms other than N.

In a third preferred group, such ($R^1$ + $R^{12}$) unsubstituted by pendent monovalent substituents.

Corresponding $QR^1R^{12}$ groups thus include correspondingly unsubstituted 4 to 7-member heterocyclic groups.

Specific initiator components (i) of interest are listed in the Descriptions hereinafter.

The co-catalysts used in the process of the present invention are either known compounds or can be prepared by known methods from or analogously to known compounds.

Where the co-catalyst is a Lewis acid, it is generally rendered available in the polymerisation process by being soluble in a polymerising monomer and/or any vehicle.

Suitable Lewis acid co-catalysts thus include zinc iodide, bromide, and chloride, mono- and dialkylaluminium halides, bis(dialkylaluminium)oxides and boron trifluoride etherate.

Where the co-catalyst is a source of anions, it is generally rendered available in the polymerisation process by containing a cation which renders it soluble in a polymerising monomer and/or any vehicle.

Favoured anions in the co-catalyst second catalyst system component include azide, cyanide, cyanate, fluoride, bifluoride, difluorotrimethylsilicate, difluorophenylstannate, and aliphatic and aromatic mono-sulphonates, and in particular fluoride, bifluoride and methanesulphonate ions.

Favoured cations therein, which render the co-catalyst available in the polymerisation medium, are often substituted -onium ions. These include quaternary ammonium and phosphonium, and tris(dialkylamino)-sulphonium, often substituted by relatively bulky organic-soluble groups eg $C_{3-6}$ alkyl,such as butyl, or $C_{5-8}$ cycloalkyl.

Alkali and alkali earth metal cations are less preferred but may be used if, in addition to the cations of the second co-catalyst component, the catalyst system also includes a solublisation aid, for example a crown ether, to complex the cations in the second component.

Suitable co-catalysts thus include zinc iodide, bromide, and chloride, mono- and dialkylaluminium halides, bis(dialkylaluminium)oxides and boron trifluoride etherate.

Favoured co-catalysts include tris(dimethylamino)sulphonium difluorotrimethylsilicate tris-(dimethylamino)sulphonium cyanide and tetraphenylarsonium cyanide.

Favoured co-catalysts also include tris(dimethylamino)sulphonium azide, tetraethylammonium azide, tris(dimethylamino)sulphonium difluorophenylstannate, tetraethylammonium cyanide and alkali metal cyanides and azides.

Preferred co-catalysts include ammonium bifluoride, tetramethylammonium fluoride and bifluoride, tetraethylammonium bifluoride and tetrabutylammonium fluoride and bifluoride.

Preferred co-catalysts also include tris(dimethylamino)sulphonium bifluoride, alkali metal fluorides and bifluorides, and tetraphenylphosphonium bifluoride, and the corresponding methanesulphonates.

Particularly preferred co-catalysts include tetrabutylammonium fluoride.

Typically the catalyst system may comprise the first and second components in molar ratios in the range of 300:1 to 3:1 more often 100:1 to 8:1.

Where, for example, a crown ether is present this will of course be present in an appropriate molar ratio to the second component.

For example the ratio may be in the range of 0.3:1 to 3:1.

The co-catalyst is suitably present in an amount such that the molar ratio of initiator to co-catalyst is in the range 0.1 to 500, preferably 1 to 10.

Suitable concentrations of initiator are generally such that the initiator:monomer molar ratio is less than 1, generally less than 1:5, favourably in an amount corresponding to a molar ratio of 1:10 and generally less, and preferably 1:1000 to 1:50 relative to the monomer(s) except where the initiator comprises an insoluble polymeric or inorganic solid.

In the latter case (ie where in formula (I) $Z_2$ is-EBE- as hereinbefore defined, the initiator is then generally used in an amount corresponding to a molar ratio of 1:100 to 1:5 relative to the monomer(s). As noted hereinbefore, the ratio of initiator (i) to co-catalyst (ii) is generally in the molar ratio range of 300:1 to 3:1, more often 100:1 to 8:1, ie the co-catalyst is generally used at a molar ratio to monomer of 1:300,000 to 1:400. The ratio of initiator to co-catalyst is given hereinbefore.

Suitable agents capable of interacting with the anion of the co-catalyst include protic species having an exchangeable proton which may be attached, for example, to an oxygen, nitrogen, sulphur, phosphorus or carbon atom. Examples of suitable protic species include compounds having an equilibrium acidity ($pK_a$ values) in the range from 0 to 35 when measured in dimethyl sulphoxide solution at 25°C as described by F G Bordwell (Acc. Chem. Res., 1988, 21 , 456-463).

Such compounds have been described in Table II of Bordwell's paper. Particularly useful compounds have $PK_a$ values in the range 0 to 22, eg in the range 7 to 18 when measured by the above mentioned method.

Suitable compounds which fulfil this criterion include:

aromatic nuclei such as benzene and benzo derivatives thereof, substituted by one or more groups with exchangeable protons, such as hydroxyl, amino, mercapto or phosphino groups, and also optionally substituted by one or more electron-withdrawing substituents, such as cyanide, cyanate, ester (including sulphonate and carboxylate) or azide, for example phenols, such as phenol, 4-cyanophenol and methyl p-hydroxybenzoate;

heteroaromatic nuclei, such as amine heteroaromatics, including benzo derivatives thereof, eg imidazole and benzimidazole;

heteroaromatic keto-enol tautomers and analogues thereof, such as amine heteroaromatic nuclei, eg purine, pyridine, pyrimidine and pyrazine, and benzo derivatives thereof, substituted in the recited nucleus by one or more groups with exchangeable protons, such as hydroxyl, amino, mercapto or phosphino groups, and optionally also one or more electron-withdrawing substituents, such as cyanide, cyanate, ester (including sulphonate and carboxylate) or azide, eg uracil, thiopyridone and adenine;

saturated aliphatics (including cyclo- and polycycloaliphatics), substituted by one or more groups with exchangeable protons, such as hydroxyl, hydroxyimino, amino, mercapto or phosphino groups, and preferably also one or more electron-withdrawing groups, eg one, but preferably two or more, aromatic nuclei such as benzene and benzo derivatives thereof, in turn optionally substituted by one or more electron-withdrawing substituents, such as cyanide, cyanate, ester (including sulphonate and carboxylate) or azide, eg oximes, such as benzophenone oxime;

aromatic nuclei, optionally substituted by one or more electron-withdrawing substituents, such as cyanide, cyanate, ester (including sulphonate and carboxylate) or azide, eg indene.

saturated aliphatics (including cyclo- and polycycloaliphatics), substituted by one or more inorganic electron-withdrawing substituents, such as cyanide, eg dicyanomethane, one or aromatic electron-withdrawing groups, such as aroyl, including sulphonic and carboxylic aroyl, such as phenylsulphonyl and benzoyl, eg bis(phenylsulphonyl)methane and phenylselenylmethyl(phenyl) ketone, or one or more aliphatic electron-withdrawing groups, eg carboxylic acyloxy such as acetoxy, eg diethyl malonate.

Suitable compounds within the foregoing also include aliphatic keto-enol tautomers, eg aliphatic ketones substituted by electron-withdrawing substituents such as carboxylic acyl, eg hexamethylacetylacetone and acetylacetone.

The interactive agent may usefully be present in a molar ratio of from 0.5 to 100 relative to the co-catalyst.

In whichever form of the process of the present invention (described further hereinafter), the monomer, or mixture of monomers, to be polymerised is combined with the initiator, co-catalyst and agent capable of interacting with the co-catalyst in a suitable polymerisation vessel.

The process may be carried out using a number of different embodiments of the catalysts of the second aspect of the invention.

Thus, for example, the initiator component (i) and the co-catalyst component (ii) may be soluble in a monomer to be polymerised and/or in a reaction vehicle.

In a second embodiment the initiator (i) may be in an insoluble form, such as one of those initiators which comprises an insoluble organic polymer or inorganic moiety. Examples where the initiator (i) is in an insoluble form, include

a) those of formula (I) where p is 2 and $Z_2$ is a group -EBE- as hereinbefore defined; and

b) those where the initiator is comprised in an insoluble composition such as a conventional insoluble catalyst support. All such insoluble forms are described hereinbefore.

Under the polymerisation process conditions the co-catalyst (ii) must be available to effect polymerisation in the polymerisation medium and this often means it must be soluble in at least one liquid monomer species, in a solvent compatible with the monomer(s) and inert in the present process conditions and/or in phase which contains at least one monomer species, to such an extent that it can catalyse the reaction adequately.

Thus in bulk polymerisations, if the co-catalyst is not soluble in a monomer, an inert solvent compatible with the monomer(s) may be used, but just in sufficient quantity to dissolve the co-catalyst.

In general such liquids should not contain labile hydrogen or halogen atoms or activated alkenyl groups.

Examples of suitable inert solvents or vehicles (if desired) include ether solvents such as dimethyl ether, diethyl ether, dimethoxyethane, diethoxyethane, diethyleneglycol dimethyl ether or tetrahydrofuran; and hydrocarbon solvents such as benzene, toluene or xylene. The ether series of solvents are preferred amongst such solvents.

No particular restrictions are placed on the order in which the polymerization initiator, (i) or a composition comprising it, co-catalyst (ii), interactive agent (iii) and monomer are added to the reaction system in the process of this invention.

Polymerization will proceed whatever sequence of such addition is used.

All the integers (i) to (iii) may thus be added to the monomer before the onset of polymerisation. This may also be effected in a number of different ways.

For example, the catalyst components and the interactive agent may all be mixed and added to the monomer, or vice versa.

However, in terms of being able to control the polymerization reaction easily, especially in the bulk polymerisation of acrylics, it is desirable

a) to add the each of the initiator (i) or composition comprising it, co-catalyst (ii) and interactive agent (iii) separately to the monomer, or

b) to add a combination of one catalyst component together with the interactive agent (iii) to the monomer or vice versa and add the product mixture to the other catalyst component or vice versa.

Thus, in the latter case, where the initiator and co-catalyst are both soluble in a solvent in which the monomer is also soluble, it is often desirable to add the initiator (i) to the monomer or its solution, or vice versa, separately from the co-catalyst (ii) together with the interactive agent (iii).

Often the initiator is added first to the monomer or vice versa.

Initiator (i), co-catalyst (ii) or interactive agent (iii) added to the reaction mixture will normally be added neat, or in the form of a solution in tetrahydrofuran or the same organic solvent as any used in the polymerization reaction.

The initiator (i) or its composition may however be insoluble. It is then often desirable to add the co-catalyst (ii) together with the interactive agent (iii) to the monomer and to contact the product mixture with

the initiator (i) or its composition.

When added initially to the polymerisation mixture in any of the foregoing ways, the interactive agent can have the effect of delaying the onset of polymerisation for an induction period of several minutes, depending upon the activity and concentration of the added interactive agent.

If desired, however, in any of the foregoing embodiments, the interactive agent (iii) may alternatively or additionally be added to a mixture of monomer, initiator and co-catalyst after the onset of polymerisation.

This has the effect of moderating the polymerisation or stopping it for a time (rather than delaying the onset of polymerisation), the effect again depending upon the activity and concentration of the added interactive agent.

When the polymerisation has been stopped by such subsequent addition of an agent capable of interacting with the co-catalyst, the dormant reaction mixture may be reactivated by the addition of more co-catalyst.

It is may be useful in any of the foregoing embodiments for the polymerisation reaction mixture to contain minor amounts of acetonitrile ab initio to moderate the rate of polymerisation.

Where the interactive agent is added initially, the acetonitrile will tend to moderate the reaction after completion of the induction period.

Where the interactive agent is added after the induction period, the acetonitrile will ensure the initial polymerisation proceeds at a controllable rate.

In this latter case it is preferable for the reaction mixture to contain from 0.05 to 5.0% by weight, based on the weight of monomer, of acetonitrile.

In all cases consisting of two mixing steps, further monomer may be added in the second mixing step. The second monomer may be the same as or different from the initial monomer. Block copolymers may thus be prepared by a solution process of this invention using two or more monomers sequentially.

In such a process variant, after initially polymerizing the first monomer using an initiator and co-catalyst with interactive agent, the second monomer is generally added to the initial product polymer solution in solution in a suitable organic solvent, which is normally the same as the first reation solvent.

The "living" polymer obtained by the method of the invention may be converted to a non-living product. This may be effected by the living polymer being contacted with an active hydrogen compound, for example water or an alcohol.

The polymerization reaction of this invention may be conducted, for example, at temperatures ranging from -100 °C to 150 °C. For solution polymerisation, a range of -20 to 60 °C is favoured, but preferably at or about ambient temperature; 40 to 100 °C is favoured in the case of bulk polymerization. The processe may be conducted under 0.1 to 50 atomspheres pressure but normally atmospheric pressure is suitable.

It is desirable that process of this invention should be conducted under anhydrous conditions, and the water content of the monomers, polymerization initiators and co-catalysts and any solvents minimised.

This is in order to obtain high molecular weight polymers by this method.

It is desirable to ensure that processes of this invention are conducted in atmospheres that have been dried in order to prevent the penetration of any water. Such atmospheres include dry air, or atmospheres of dried inert gases such as nitrogen or argon; dried inert gas atmospheres are preferable.

The method of the invention is particularly useful for the bulk polymerisation of acrylics at room temperature, optionally in the presence of fillers, for the production of sheets, rods etc.

Dispersion type polyacrylates may also be prepared.

The invention is illustrated but not limited by the following Examples.

The preparation of initiators and catalysts used in the process of the present invention is illustrated by the following Descriptions:

Descriptions 1 and 2 - Preparation of Initiator Components (i) of General Formula (I) $MXZ_3$.

Description 1 - Preparation of 9-trimethylsilylcarbazole (E.1)

To a solution of carbazole (15g) in dry THF (200 ml) was added butyllithium (56 ml; 1.6M in hexane).

Once the butyllithium addition was completed, the solution was heated to reflux for 1.5 hours and then allowed to cool.

Chlorotrimethylisilane (12 ml) was added dropwise to the cooled mixture and then heated to reflux for 4 hours. Toluene (150 ml) was added to the cool mixture which was then filtered to remove LiCl.

The filtrate was collected and the solvent removed under vacuum leaving a crude gray compound. The

crude product was further purified by vacuum distillation (0.03 mm Hg 184-186 °C) to give a white compound (E.1) in an 84% yield.

It could be further purified by recrystallisation in hexane.

| | | | | |
|---|---|---|---|---|
| n.m.r. ($CDCl_3$) ; | 0.7<br>7.08-8.4 | s<br>broad | 9H<br>8H | SiMe3;<br>aromatic-H. |

The following compounds were prepared analogously from the corresponding amine and chlorosilane:

9-triphenylsilylcarbazole (E.2)
N-trimethylsilyl-N-phenyl-2-methyl-1-phenylprop-1-enylamine. (E.3)
N-trimethylsilylmorpholine (E.4)
1-trimethylsilylimidazole (E.5)
3-trimethylsilyloxazolid-2-one (E.6)

The following compounds are prepared analogously from the corresponding amine and chlorosilane:

N-trimethylsilyl-N-methylacetamide (E.7)
N-trimethylsilyl-N-methyltrifluoroacetamide (E.8)
N-trimethylsilyl-N-cyclohex-1-enylmethylamine (E.9)
diphenyl(trimethylsilyl)amine (E.10)
dibenzyl(trimethylsilyl)amine (E.11)
N-trimethylsilylpyrrole (E.12)
1-N trimethylsilylpyrrolidine (E.13)
N-trimethylsilylpiperidine (E.14)
N-triphenylsilylmorpholine (E.15)
N-methyl-N′-trimethylsilypiperazine (E.16)
N-trimethylsilylindole (E.17)
9-tribenzylsilylcarbazole (E.18)
9-adamantyldimethylsilylcarbazole (E.19)
9-dimethylneopentylsilylcarbazole (E.20)
9-triethoxysilylcarbazole (E.21)
9-triphenoxysilylcarbazole (E.22)
9-tribenzyloxysilylcarbazole (E.23)
N trimethylsilylindan-2-one (E.24)
N-trimethylsilyltrifluoroacetanilide (E.25)
N-trimethylsilylpiperidine-2,6-dione (E.26)

The following compounds were also prepared analogously:

N,N′ bis(trimethylsiliyl)piperazine-2,5-dione (E.27)
N-trimethylsilylacetanilide (E.28)
N-trimethylsilylsuccinimide (E.29)

Description 2 - Preparation of Diphenyl(trimethyl silyl)phosphine (E.30)

This was prepared analogously to (E.1) above from diphenylphosphine.

The following compounds are prepared analogously from the corresponding phosphine and chlorosilane:

9-trimethylsilyl-9-phosphafluorene (E.31)
benzoylphenyltrimethylsilylphosphine (E.32)
1-phospha-1-trimethylsilylcyclopentane (E.33)
diethyltrimethylsilylphosphine (E.34)
dibutyl trimethylsilylphosphonate (E.35)
dibenzyltrimethylsilylphosphine (E.36)
P-trimethylsilyl-P-phenyl-2-methyl1-phenylpropenylphosphine (E.37)
benzylbenzoyltrimethylsilylphosphine (E.38)
1-phospha-1-trimethylsilylcyclohexane (E.39)

acetylethyltrimethylsilylphosphine (E.40)
dicyclohexyl trimethylsilylphosphonate (E.41)

Description 3 - Preparation of Initiator Components of General Formula (I) MXY(EBE)

A suspension of fumed silica (Carbosil-SM) is lithiated analogously to Description 1, and the product is treated with an excess of 9-carbazolyldichloromethylsilane to give the desired product (E.42).

Finely divided alumina may also be used.

Description 4 - Preparation of Initiator Components of

a) General Formula (I) $MXY_2Z$ where Z is a Polymer Radical

b) General Formula (I) $MXZ_3$ where X is a Polymer Chain

a) Preparation of poly(9-carbazolyldimethylsilylpropyl methacrylate

Analogously to Description 1, carbazole is N-lithiated, and the product treated with chloro(3-methacryloxypropyl)dimethylsilane to give the above monomer.

The monomer is polymerised conventionally to give the desired product (E.43).

b) Preparation of Poly(N-trimethylsilyl-1-propylbutylene carboxamide)

An amorphous nylon, poly(1-propylbutylenecarboxamide), is N-lithiated in THF solution at -70 °C, and the product is treated with chlorotrimethylsilane to give the desired product (E.44).

Descriptions 5 and 6 - Preparation of Initiator Components i) of General Formula (II) $MXZ_3$.

Description 5 - Preparation of N-trimethylsilyl-N-hexyl-N′,N′-dimethylurea (E.51)

To a solution of N-hexyl-N′,N′-dimethylurea (15g) in dry THF (200 ml) was added butyllithium (56 ml; 1.6M in hexane). Once the butyllithium addition was completed, the solution was heated to reflux for 1.5 hours and then allowed to cool.

Chlorotrimethylisilane (12 ml) was added dropwise to the cooled mixture and then heated to reflux for 4 hours.

Toluene (150 ml) was added to the cool mixture which was then filtered to remove LiCl.

The filtrate was collected and the solvent removed under vacuum leaving a crude grey compound. The crude product was further purified by vacuum distillation to give a white compound (E.51) in an 84% yield.

It could be further purified by recrystallisation in hexane.

The following compounds were prepared analogously from the corresponding urea and chlorosilane:
N-trimethylsilyl-N-methyl-N′,N′-dimethylurea (E.52)
N-trimethylsilyl-N′,N′-dimethylurea (E.53)
N-trimethylsilyl-N-methyl-N′-trimethylsilyl-N′-methyl-urea (E.54)

Description 6

The following compounds are prepared analogously from the corresponding urea and chlorosilane:
N-phenyl-N-trimethylsilyl-N′,N′-dimethylurea (E.55)

N-benzyl-N-trimethylsilyl-N′,N′-dimethylurea (E.56)
N-(N′-methyl-N′-trimethylsilylcarbamoyl)pyrrolidine (E.57)
N-(N′-methyl-N′-trimethylsilylcarbamoyl)piperidine (E.58)
N-(N″-methyl-N′-trimethylsilylcarbamoyl)-N′-methylpiperazine (E.59)
N-(N′-methyl-N′-trimethylsilylcarbamoyl)imidazolidine (E.60)
N-(Nmethyl-N′-trimethylsilylcarbamoyl)oxazolidine (E.61)

Description 7 - Preparation of Initiator Components of General Formula (II) MXY(EBE)

A suspension of fumed silica (Carbosil-SM) is lithiated analogously to Description 5, and the product is treated with an excess of N-dimethylcarbamoyl-N-hexylaminodichloromethylsilane to give the desired product (E.62).

Finely divided alumina may also be used.

Description 8 - Preparation of Initiator Components of

a) General Formula (II) $MXY_2Z$ where Z is a Polymer Radical

b) General Formula (II) $MXZ_3$ where X is a Polymer Chain

a) Preparation of poly(N-dimethylcarbamoyl-N-hexylaminomethylsilyldimethylsilylpropyl methacrylate)

Analogously to Description 1, N-hexyl-N′,N′-dimethylurea is N-lithiated, and the product treated with chloro-(3-methacryloxypropyl)methylsilane to give the above monomer.

The monomer is polymerised conventionally to give the desired product (E.63)

b) Preparation of Poly(N-trimethylsilyl-N′-1-propylbutylene-N′-methylurea (E.64)

An polyurea, poly(N-1-propylbutylene1-methylurea) is N-lithiated in THF solution at -70 °C, and the product is treated with chlorotrimethylsilane to give the desired product (E.64).

Descriptions 9 and 10 - Preparation of Initiator Components i) of General Formula (III) $MXZ_3$.

Description 9 - Preparation of 1,6-bis-(9-trimethylsilylcarbazol-2-yloxy)hexane (E.71)

To a solution of 1,6-bis(carbazol-2-yloxy)hexane (30 g) in dry THF (200 ml) was added butyllithium (56 ml; 1.6M in hexane). Once the butyllithium addition was completed, the solution was heated to reflux for 1.5 hours and then allowed to cool. Chlorotrimethylsilane (12 ml) was added dropwise to the cooled mixture and then heated to reflux for 4 hours.

Toluene (150 ml) was added to the cool mixture which was then filtered to remove LiC1. The filtrate was collected and the solvent removed under vacuum leaving a crude gray compound. The crude product was further purified by vacuum distillation to give a white compound (E.71) in an 84% yield.

It could be further purified by recrystallisation in hexane.

The following compounds were prepared analogously from the corresponding diamine or diphosphine and chlorosilane:

1,6-bis(1-trimethylsilylimidazolid-2,4-dion-3-yl)hexane (E.72)
1,3-bis(phenyltrimethylsilylphosphino)propane (E.73)

Description 10

The following compounds are prepared analogously from the corresponding diamine and chlorosilane:
1,6-bis(3-trimethylsilylimidazolyl)hexane (E.74)
1,6-bis(3-trimethylsilyloxazolid-2-onyl)hexane (E.75)
1,6-(N-trimethylsilyl-N-cyclohex-1-enylamino)hexane (E.76)
1,6-bis-(N-trimethylsilylpiperazino)hexane (E.77)
1,6-bis(9-tribenzylsilylcarbazol2-yloxy)hexane (E.78)
1,6-bis(9-triethoxysilylcarbazol2-yloxy)hexane (E.79)

Description 11 - Preparation of Initiator Components comprising Moieties of General Formula (III) $MXZ_3$ where X is a Polymer Chain

Preparation of poly(N-trimethylsilylacrylonitrile) (E.80)

Analogously to Description 1, acrylonitrile is N-lithiated, and the product treated with chlorotrimethylsilane to give the above monomer.

The monomer is polymerised conventionally to give the desired product (E.80).

Example 1 - Polymerisation of methyl methacrylate (MMA) catalysed by component (i) and tetrabutyl ammonium fluoride (TBAF) in the presence of acetylacetone (AcAc)

0.025 mM of TBAF, 5 mls of MMA (46.8 mmol) and 2 µl of AcAc (0.019 mmol) are added to a dry glass reaction vessel under $N_2$. Whilst stirring, a solution of any of (E.1) to (E.80) (0.0496 mM) in an inert vehicle is added using a microlitre syringe. The polymerisation rate is followed by monitoring the temperature using a thermocouple.

For several minutes there is no significant temperature rise indicating minimal polymerisation. There is then an exponential temperature rise to over 100 °C over the next few mins when >90% of the monomer is converted to polymer.

Example 2 - Inducing an induction period

To a pre-dried Schlenk tube (under dry nitrogen) containing the same quantity of an initiator as described in Example 1 and an interactive agent (as a 0.1M solution in THF) is added an acrylic monomer (5g).

To the stirred reaction mixture is added the co-catalyst as a 0.1M solution in acetonitrile. The induction time is measured from the time of co-catalyst addition to a point at which there is a rise in temperature as measured by an immersed thermocouple.

The interactive agents are selected from:
diethyl malonate (A.1)
imidazole (A.2)
benzophenone oxime (A.3)
uracil (2,4-hydroxypyrimidine) (A.4)
phenol (A.5)
dicyanomethane (A.6)

The polymerised monomers are selected from methyl methacrylate (MMA) and ethyl acrylate (EA).

Example 3 - Inducing a dormancy period

Polymerisation is carried out generally as described in Example 1. However, the interactive species is added (as a 0.1M solution in THF) after the start of polymerisation. This is done either 30 seconds after onset of polymerisation or when the reaction temperature has reached 50 °C.

The deceleration in polymerisation rate is recorded using a thermocouple.

As the rate decreases, there is a corresponding reduction in the rate of heat evolution.

The dormancy period is measured from the time of addition of interactive agent to the point at which the rate of polymerisation startes to generate more heat.

The polymer is isolated as in Example 1.

The interactive agents and polymerised monomers are those of Example 2.

## Claims

1. A polymerisation process which comprises contacting at least one polar acrylic type or maleimide monomer under polymerisation conditions with a catalyst system comprising a catalyst comprising (i) and (ii):

(i) a tetracoordinate organosilicon, organotin or organogermanium initiator having at least one initiating site in which a silicon, tin or germanium atom is bound by a nitrogen or phosphorus atom to a nitrogen, or phosphorus-containing group which is devoid of any reactive hydrogen atom,

(ii) a co-catalyst which is a source of fluoride, bifluoride, cyanide, cyanate, aliphatic and aromatic mono-sulphonate, or azide ions or a Lewis acid, and which ions or Lewis acid are/is rendered available in the polymerisation medium, and

(iii) an interactive agent capable of interacting with the anion of the co-catalyst.

2. A polymerisation process according to claim 1, characterised in that the interactive agent is one having an exchangeable proton attached to an oxygen, nitrogen, sulphur, phosphorus or carbon atom and having an equilibrium acidity ($pK_a$ value) in the range from 0 to 22 when measured in dimethyl sulphoxide solution at 25° C.

3. A polymerisation process according to claim 2, characterised in that the interactive agent is one selected from

aromatic nuclei substituted by one or more hydroxyl, amino, mercapto or phosphino groups, and also optionally substituted by one or more cyanide, cyanate, ester (including sulphonate and carboxylate) or azide groups;

amine heteroaromatic nuclei;

amine heteroaromatic keto-enol tautomers and analogues thereof, substituted in the heteroaromatic nucleus by one or more hydroxyl, amino, mercapto or phosphino groups, and optionally also one or more cyanide, cyanate, ester (including sulphonate and carboxylate) or azide groups;

saturated aliphatics (including cyclo- and polycycloaliphatics), substituted by one or more groups hydroxyl, hydroxyimino, amino, mercapto or phosphino groups, and optionally also one or more aromatic nuclei such as benzene and benzo derivatives thereof, in turn optionally substituted by one or more cyanide, cyanate, ester (including sulphonate and carboxylate) or azide groups;

aromatic nuclei, optionally substituted by one or more cyanide, cyanate, ester (including sulphonate and carboxylate) or azide groups;

saturated aliphatics (including cyclo- and polycycloaliphatics), substituted by one or more cyanide groups, one or more aroyl groups (including sulphonic and carboxylic aroyl), or one or more aliphatic carboxylic acyloxy groups.

4. A polymerisation process according to claim 2, characterised in that the interactive agent is an aliphatic ketone substituted by carboxylic acyl.

5. A polymerisation process according to claim 1, characterised in that the interactive agent is present in a molar ratio of from 0.5 to 100 relative to the co-catalyst.

6. A polymerisation process according to claim 1, characterised in that the initiator component (i) and the co-catalyst component (ii) are both soluble in a monomer to be polymerised and/or in a reaction vehicle.

7. A polymerisation process according to claim 1, characterised in that the initiator (i) is in a form insoluble in a monomer to be polymerised and/or in a reaction vehicle.

8. A catalyst system consisting of the componemts (i) to (iii) recited in claim 1, for use in the process of claim 1.

9. The combination of components (ii) and (iii) recited in claim 1, for use in the process of claim 1.

10. A process according to claim 1, characterised in that a polymerised monomer is of the formula:

$CH_2=C(Y)X$ or 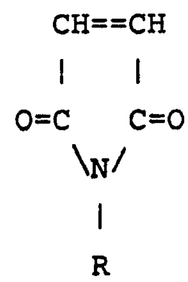

wherein:

X is CN, $-CH=CHC(O)X'$ or $-C(O)X'$;

Y is -H, $-CH_3$,-CN or $-CO_2R$, provided, however, when $X'$ is $-CH=CHC(O)X'$, Y is -H or $-CH_3$;

$X'$ is $-OSi(R^1)_3$, -R, -OR or $-NR'R''$; each $R^1$ independently is H or a hydrocarbyl radical which is an aliphatic, alicyclic, aromatic or mixed aliphatic-aromatic radical containing up to 20 carbon atoms, provided that at least one $R^1$ group is not H;

R is a hydrocarbyl radical which is an aliphatic, alicyclic, aromatic or mixed aliphatic aromatic radical containing up to 20 carbon atoms, or a polymeric radical containing at least 20 carbon atoms,

any of said radicals optionally containing one or more ether oxygen atoms within aliphatic segments thereof and optionally containing one or more functional substituents that are unreactive under polymerizing conditions, and optionally containing one or more reactive substituents of the formula:

$-Z'(O)C-C(Y^1)=CH_2$ wherein

$Y'$ is H or $CH_3$ and $Z'$ is O or $NR'$;

and

each of $R'$ and $R''$ is independently selected from $C_{1-4}$ alkyl.